# EUROPEAN PATENT APPLICATION

(11) **EP 3 282 781 A1**
(43) Date of publication of application: **14.02.2018**
(21) Application number: 15892831.7
(22) Date of filing: 22.05.2015
(51) Int. Cl.: H04W 64/00

(54) **METHOD AND DEVICE FOR IMPROVING POSITIONING PERFORMANCE OF ARTIFICIAL NEURAL NETWORK**

(71) Applicant: Huawei Technologies Co., Ltd., Longgang District Shenzhen, Guangdong 518129 (CN)
(72) Inventor: LI, Anjian, Shenzhen, Guangdong 518129 (CN); CUI, Jie, Shenzhen, Guangdong 518129 (CN); HAN, Jing, Shenzhen, Guangdong 518129 (CN); LI, Hong, Shenzhen, Guangdong 518129 (CN)
(74) Representative: Körber, Martin Hans
(86) International application number: PCT/CN2015/079553
(87) International publication number: WO 2016/187746

(57) **Abstract**

Embodiments of the present invention provide a method and an apparatus for improving positioning performance of an artificial neural network. The method includes: establishing an initial ANN; optimizing the initial ANN by using a PSO algorithm, to obtain an optimized initial ANN; training the optimized initial ANN to obtain a trained ANN. According to a positioning method and apparatus provided in the embodiments of the present invention, when an ANN is used for positioning, positioning performance is improved by using a PSO algorithm to optimize a weight and an offset of each neural element in the ANN.

## Description

### TECHNICAL FIELD

Embodiments of the present invention relate to the field of wireless communications technologies, and in particular, to a method and an apparatus for improving positioning performance of an artificial neural network.

### BACKGROUND

A positioning technology is a technology used to determine a geographical location of a terminal, and geographical location information of the terminal may be directly or indirectly obtained by using a wireless communications network resource.

At present, outdoor positioning is a main focus of the positioning technology. With development of wireless technologies, indoor positioning draws ever-increasing attention. The indoor positioning is applied to an emergency, such as public safety, business, and military application. Currently, many positioning methods have been studied in the industry. Positioning systems depending on a satellite are great successes in an outdoor circumstance. However, due to obstruction of buildings, it is extremely difficult to apply these systems to an indoor circumstance.

A feasible method for implementing indoor positioning is to use a wireless sensor network (Wireless Sensor Networks, WSN) or a wireless local area network (Wireless Local Area Networks, WLAN). These are stable wireless technologies with low costs. At present, there are three main indoor positioning methods, including a distance-independent method, a distance-based method, and a fingerprint matching method. The distance-independent method has a high energy efficiency ratio and low costs but is merely applied to a network with high connectivity. Therefore, this method has relatively poor precision. The distance-based method is mainly based on measured signals, and then a mathematical model of a channel is used for positioning. It is extremely difficult to determine a channel model in a multipath propagation and fast fading circumstance. Therefore, relatively high precision positioning can hardly be implemented by using these methods. The fingerprint-matching positioning method is of a great potential to obtain relatively high positioning precision. This method is based on a fact that each location has its own distinctive sign, such as an RSSI. Sign information corresponding to some locations is pre-stored in a database. During positioning, a specific location of UE is determined by matching sign information in the database.

Generally, there are two fingerprint-matching positioning methods. One is a classical non-intelligent method, such as a nearest neighbor (Nearest Neighbors, NN) method, K nearest neighbor (K Nearest Neighbors, KNN) method, and K weighted nearest neighbor (K Weighted Nearest Neighbors, KWNN) method. These methods have low costs but relatively poor precision. The second method is a well-known intelligent method. The intelligent method is also referred to as the fingerprint matching method. An artificial neural network (Artificial Neutral Network, ANN) is one fingerprint matching method, and has a great potential in an indoor positioning technology.

When the ANN is applied to the positioning technology, the ANN is divided into two phases: a training phase and a positioning phase. In the training phase, geographical location information and fingerprint information of a known place are used to train the artificial neural network. Then, in the positioning phase, fingerprint information measured at a to-be-positioned point is input into a trained artificial neural network, so as to obtain geographical location information of the to-be-positioned point. In the training phase, an initial artificial neural network is immediately generated first. Then, the initial artificial neural network is trained to obtain the trained artificial neural network.

The ANN has excellent performance in a WSN positioning system. However, a disadvantage of the ANN is in searching for a global best, in particular, in a circumstance of incomplete or non-ideal information. Therefore, in an actual indoor circumstance, this method can hardly bring relatively high performance due to existence of multipath and fast fading factors. That is, in the training phase, when the immediately generated initial artificial neural network is trained, a trained artificial neural network may not be an optimal artificial neural network. Consequently, positioning performance may be affected by using the trained artificial neural network for positioning.

Therefore, when the ANN is used for positioning, how to obtain the optimal artificial neural network in the training phase to improve positioning performance is a key problem that urgently needs to be resolved.

### SUMMARY

Embodiments of the present invention provide a method and an apparatus for improving positioning performance of an artificial neural network, so as to use a PSO algorithm to optimize a weight and an offset of each neural element in an ANN, and improve positioning performance when the ANN is used for positioning.

According to a first aspect, a method for improving positioning performance of an artificial neural network is provided, including:
obtaining geographical location information and fingerprint information of at least one test point;
randomly selecting an initial weight and an initial offset of each neural element at an input layer, an output layer, or a hidden layer by using the fingerprint information of the at least one test point as an input layer neural element and using the geographical location information of the at least one test point as an output layer neural element, so as to establish an initial ANN;
optimizing the initial weight and the initial offset of each neural element of the initial ANN by using a PSO algorithm, to obtain an optimized initial ANN; and
training the optimized initial ANN to obtain a trained ANN.

With reference to the first aspect, in a first possible implementation of the first aspect, the optimizing the initial weight and the initial offset of each neural element of the initial ANN by using a PSO algorithm, to obtain an optimized initial ANN includes:
using the initial weight and the initial offset of each neural element of the initial ANN as a particle initial location of the PSO algorithm and randomly selecting an initial speed of each particle, so as to establish a swarm of the PSO algorithm;
in each iteration of an iteration process of the PSO algorithm, sequentially computing fitness of each particle in the PSO algorithm, updating an optimal particle in the swarm of the PSO algorithm, and updating a location and a speed of each particle in the swarm of the PSO algorithm, until iteration times of the PSO algorithm end;
using a best location of each particle in the swarm of the PSO algorithm as an optimized weight and an optimized offset of each neural element of the initial ANN; and
using the optimized weight and the optimized offset of each neural element of the initial ANN to establish the optimized initial ANN.

With reference to the first aspect, in a second possible implementation of the first aspect, the optimizing the initial weight and the initial offset of each neural element of the initial ANN by using a PSO algorithm, to obtain an optimized initial ANN includes:
using the initial weight and the initial offset of each neural element of the initial ANN as a particle initial location of the PSO algorithm and randomly selecting an initial speed of each particle, so as to establish a swarm of the PSO algorithm;
in each iteration of an iteration process of the PSO algorithm, sequentially computing fitness of each particle in the PSO algorithm, updating an optimal particle in the swarm of the PSO algorithm, and updating a location and a speed of each particle in the swarm of the PSO algorithm, until a sum of fitness of all particles in the PSO algorithm is less than a preset threshold;
using a best location of each particle in the swarm of the PSO algorithm as an optimized weight and an optimized offset of each neural element of the initial ANN; and
using the optimized weight and the optimized offset of each neural element of the initial ANN to establish the optimized initial ANN.

With reference to the first or the second possible implementation of the first aspect, in a third possible implementation of the first aspect, the computing fitness of each particle in the PSO algorithm includes:
using the location of each particle in the PSO algorithm as a weight and an offset in the initial ANN;
computing an output layer neural element of the initial ANN by using the fingerprint information of the at least one test point as an input layer neural element; and
computing an error between the output layer neural element and the geographical location information of the at least one test point, and using the error as the fitness of the particle; and
the updating an optimal particle in the swarm of the PSO algorithm includes:
   using a minimum-error particle as the optimal particle in the swarm of the PSO algorithm.

With reference to any one of the first aspect or the first to the third possible implementations of the first aspect, in a fourth possible implementation of the first aspect, the ANN is a back propagation-ANN or a generalized regression linear network.

With reference to any one of the first aspect or the first to the fourth possible implementations of the first aspect, in a fifth possible implementation of the first aspect, the fingerprint information is an RSSI.

According to a second aspect, an apparatus for improving positioning performance of an artificial neural network is provided, including:
an obtaining module, configured to obtain geographical location information and fingerprint information of at least one test point;
an initial information module, configured to randomly select an initial weight and an initial offset of each neural element at an input layer, an output layer, or a hidden layer by using the fingerprint information of the at least one test point as an input layer neural element and using the geographical location information of the at least one test point as an output layer neural element, so as to establish an initial ANN;
an optimization module, configured to optimize the initial weight and the initial offset of each neural element of the initial ANN by using a PSO algorithm, to obtain an optimized initial ANN; and
a training module, configured to train the optimized initial ANN to obtain a trained ANN.

With reference to the second aspect, in a first possible implementation of the second aspect, the optimization module is specifically configured to: use the initial weight and the initial offset of each neural element of the initial ANN as a particle initial location of the PSO algorithm and randomly select an initial speed of each particle, so as to establish a swarm of the PSO algorithm; in each iteration of an iteration process of the PSO algorithm, sequentially compute fitness of each particle in the PSO algorithm, update an optimal particle in the swarm of the PSO algorithm, and update a location and a speed of each particle in the swarm of the PSO algorithm, until iteration times of the PSO algorithm end; use a best location of each particle in the swarm of the PSO algorithm as an optimized weight and an optimized offset of each neural element of the initial ANN; and use the optimized weight and the optimized offset of each neural element of the initial ANN to establish the optimized initial ANN.

With reference to the second aspect, in a second possible implementation of the second aspect, the optimization module is specifically configured to: use the initial weight and the initial offset of each neural element of the initial ANN as a particle initial location of the PSO algorithm and randomly select an initial speed of each particle, so as to establish a swarm of the PSO algorithm; in each iteration of an iteration process of the PSO algorithm, sequentially compute fitness of each particle in the PSO algorithm, update an optimal particle in the swarm of the PSO algorithm, and update a location and a speed of each particle in the swarm of the PSO algorithm, until a sum of fitness of all particles in the PSO algorithm is less than a preset threshold; use a best location of each particle in the swarm of the PSO algorithm as an optimized weight and an optimized offset of each neural element of the initial ANN; and use the optimized weight and the optimized offset of each neural element of the initial ANN to establish the optimized initial ANN.

With reference to the first or the second possible implementation of the second aspect, in a third possible implementation of the second aspect, the optimization module is specifically configured to: use the location of each particle in the PSO algorithm as a weight and an offset in the initial ANN; compute an output layer neural element of the initial ANN by using the fingerprint information of the at least one test point as an input layer neural element; compute an error between the output layer neural element and the geographical location information of the at least one test point, and use the error as the fitness of the particle; and use a minimum-error particle as the optimal particle in the swarm of the PSO algorithm.

With reference to any one of the second aspect or the first to the third possible implementations of the second aspect, in a fourth possible implementation of the second aspect, the ANN is a back propagation-ANN or a generalized regression linear network.

With reference to any one of the second aspect or the first to the fourth possible implementations of the second aspect, in a fifth possible implementation of the second aspect, the fingerprint information is an RSSI.

According to the method and the apparatus for improving positioning performance of an artificial neural network provided in the embodiments, when an artificial neural network is used for wireless positioning, after a random initial weight and offset are used to establish an initial artificial neural network, a PSO algorithm is used to optimize an initial weight and an initial offset at each layer of the initial artificial neural network, so as to obtain an optimized initial artificial neural network. The optimized artificial neural network is trained to obtain a trained artificial neural network. An initial weight and an initial offset of a global best can be obtained by using the PSO algorithm to optimize the initial weight and the initial offset. Therefore, positioning performance can be improved by using the artificial neural network provided in the embodiments of the present invention.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of an artificial neural network algorithm;
FIG. 2 is a flowchart of Embodiment 1 of a method for improving positioning performance of an artificial neural network according to an embodiment of the present invention;
FIG. 3 is a flowchart of Embodiment 2 of a method for improving positioning performance of an artificial neural network according to an embodiment of the present invention;
FIG. 4 is a flowchart of Embodiment 3 of a method for improving positioning performance of an artificial neural network according to an embodiment of the present invention;
FIG. 5 is a flowchart of Embodiment 4 of a method for improving positioning performance of an artificial neural network according to an embodiment of the present invention;
FIG. 6 is a schematic structural diagram of Embodiment 1 of an apparatus for improving positioning performance of an artificial neural network according to an embodiment of the present invention; and
FIG. 7 is a schematic structural diagram of Embodiment 2 of an apparatus for improving positioning performance of an artificial neural network according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

An ANN is a well-known pattern matching algorithm and is applied to a multi-layer and multi-connection artificial neural network. An artificial neural element simulates a biometric neural element by using an activation function. Each neural element has an activation function, and the activation function is responsible for mapping input of the neural element into output of the neural element. A structure of a neural network depends on a mutual connection manner of artificial neural elements at different layers. Each neural element has its own weight and offset. The weight and the offset may be adjusted in a training phase. This type of learning process is referred to as learning under supervision and is used to find an optimal mapping function from input to output.

When output computed by the artificial neural network is lower than a specified error threshold, the artificial neural network ends its training phase. Then, a trained network may be used to resolve a pattern recognition problem.

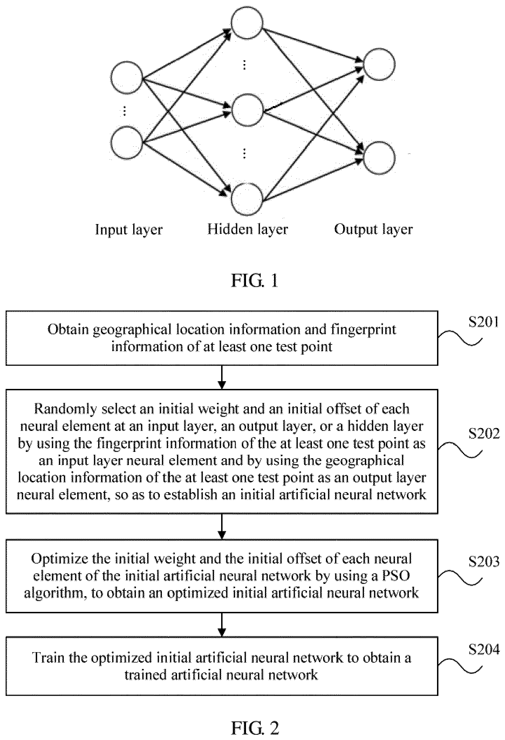

FIG. 1 is a schematic structural diagram of an artificial neural network algorithm. As shown in FIG. 1, an entire artificial neural network is divided into an input layer, a hidden layer, and an output layer. Nodes (also referred to as neural elements) of the input layer, the hidden layer, and the output layer are related to each other. Each node represents one type of specific function output, and a connection between every two nodes represents one weighted value to a signal by using the connection, that is, a weight.

A purpose of training the artificial neural network is to find a function relationship, a weight, and an offset that are corresponding to a node at each layer, so as to obtain a nonlinear function relationship from input layer nodes to output layer nodes.

When the ANN is applied to a wireless positioning technology, first, in a training phase of the ANN, fingerprint information needs to be measured at some measurement points. For example, an RSSI is used as fingerprint information. At a measurement point whose geographical location information (such as longitude and latitude information) is known, a received RSSI of each wireless access point (Access Point, AP) is measured. Multiple RSSIs of one measurement point are used as input neural elements of the artificial neural network, location information of the measurement point is used as an output neural element, and RSSIs and location information of multiple measurement points are used to train the artificial neural network until output of the artificial neural network is lower than a specified error threshold. In this way, a training process of the artificial neural network is completed.

When a trained artificial neural network is used for positioning, an RSSI of each AP that is received by a to-be-positioned point is input into the trained artificial neural network, and then, location information of the to-be-positioned point is obtained and positioning is completed.

However, in a conventional artificial neural network, in a training process of the network, first, an initial weight and an initial offset of each node (neural element) need to be randomly selected. Then, the artificial neural network is trained by using the initial weight and the initial offset. However, there may be a relatively large difference between the randomly selected initial weight and initial offset and an optimal weight and offset. When the ANN is used to train the network, the weight and the offset may be converged to a local optimal value. However, when the local optimal weight and offset are used for wireless positioning, positioning performance is affected.

FIG. 2 is a flowchart of Embodiment 1 of a method for improving positioning performance of an artificial neural network according to an embodiment of the present invention. As shown in FIG. 2, the method of this embodiment includes the following steps.

Step S201: Obtain geographical location information and fingerprint information of at least one test point.

Specifically, a positioning method provided in this embodiment is based on the ANN algorithm shown in FIG. 1. The positioning method provided in this embodiment includes two phases: a training phase and a positioning phase. In the training phase, an artificial neural network is trained according to known location information and fingerprint information of some measurement points, so as to obtain a weight and an offset of each layer of the artificial neural network. Then, in the positioning phase, measured fingerprint information is input into a trained artificial neural network, so as to obtain location information of a to-be-positioned place.

In this step, first, the training phase of positioning is performed. Geographical location information and fingerprint information of at least one test point need to be obtained, so as to train the artificial neural network. More test points bring better performance of the artificial neural network obtained by means of training. Fingerprint information of each test point may be any measurement quantity that is measured at the test point and that can represent a distinctive sign of the test point, such as an RSSI. In a wireless network, each test point may receive signals from multiple APs. Therefore, fingerprint information of each test point may include multiple measurement quantities. In addition, the geographical location information of the test point may be determined by using any known positioning method. For example, a positioning system such as a Global Positioning System (Global Positioning System, GPS) is used for determining the geographical location information of the test point. Generally, the geographical location information of the test point is a longitude value and a latitude value.

Step S202: Randomly select an initial weight and an initial offset of each neural element at an input layer, an output layer, or a hidden layer by using the fingerprint information of the at least one test point as an input layer neural element and using the geographical location information of the at least one test point as an output layer neural element, so as to establish an initial artificial neural network.

Specifically, when the geographical location information and the fingerprint information of the at least one test point are obtained, the initial artificial neural network needs to be established. The fingerprint information of the at least one test point is separately used as an input layer neural element, and the geographical location information of the at least one test point is separately used as an output layer neural element. Then, an initial weight and an initial offset of each neural element at the input layer, the output layer, or the hidden layer are randomly selected, so as to establish the initial artificial neural network. A quantity of input layer neural elements of the initial artificial neural network varies with a quantity of measurement quantities measured at each test point. The quantity of input layer neural elements of the initial artificial neural network is two, that is, a longitude value and a latitude value of a geographical location of the test point.

A method for establishing the initial artificial neural network in this step is the same as an existing method for applying an ANN to a wireless positioning technology.

Step S203: Optimize the initial weight and the initial offset of each neural element of the initial artificial neural network by using a particle swarm optimization (Particle Swarm Optimization, PSO) algorithm to obtain an optimized initial artificial neural network.

Specifically, to resolve a problem that when the artificial neural network is applied to the wireless positioning technology, an optimal weight and offset may not be obtained when the artificial neural network is trained, in this embodiment, the PSO algorithm is applied to the training phase of the artificial neural network, and the PSO algorithm is used to optimize a randomly selected initial weight and initial offset of the initial artificial neural network, so as to obtain an optimized initial artificial neural network.

The PSO algorithm belongs to a particle swarm theory and is found when a simplified social model is simulated. The PSO algorithm simulates features of a flock of birds and a shoal of fish. In one particle swarm optimization, there is a swarm of candidate solutions that become individuals or particles. In addition, these individuals or particles evolve by means of cooperation or competition.

A principle of the PSO algorithm is to define a particle *xᵢ* = {*x*₁,*x*₂,...,*x_{N}*} in N-dimensional space, and a flight speed of each particle in the space is *Vᵢ* = {*V*₁,*V*₂,...,*V_{N}*}. Each particle has one fitness value (fitness value) decided by a target function, and each particle knows its best location (pbest) found up to now and a present location. Each particle further knows a best location (gbest) found up to now by all particles in an entire particle swarm. Each particle follows an optimal particle in the entire particle swarm to perform searching in the space. After multiple times of iterations, an optimal solution in the entire space (a best location in the entire space) is finally found.

The PSO algorithm has an advantage in searching for a global optimal solution. Therefore, in this embodiment, the PSO algorithm is applied to the artificial neural network. The PSO algorithm is used to search for an optimal initial weight and an optimal initial offset of the initial artificial neural network, so as to obtain an optimal initial artificial neural network.

In this embodiment, the initial weight and the initial offset of the initial artificial neural network are used as a particle of the PSO algorithm. These particles can find their best locations in search space by means of competition and cooperation between them. When each iteration process of the PSO algorithm ends, a weight and an offset that are obtained after iteration and are corresponding to each particle are substituted into the artificial neural network. Fingerprint information of each test point is used as input, so as to compute an error between output obtained after each test point is processed by the artificial neural network and actual geographical location information of the test point. A minimum-error weight and offset are a best location (gbest) of this round of iteration of the PSO algorithm.

The foregoing errors of all test points are synthesized to obtain an overall error of this iteration process of the PSO algorithm. A purpose of using the PSO algorithm to optimize the initial weight and the initial offset is to make the foregoing overall error be less than a preset threshold. If the computed overall error is not less than the preset threshold, next computing of the PSO algorithm is performed. If the computed overall error is less than the preset threshold, an optimized initial weight and initial offset are obtained, and an optimized initial artificial neural network is obtained. Alternatively, a purpose of using the PSO algorithm to optimize the initial weight and the initial offset is to end an optimization process when iteration times of the PSO algorithm reach preset times, so as to obtain the optimized initial artificial neural network.

Step S204: Train the optimized initial artificial neural network to obtain a trained artificial neural network.

Specifically, after the optimized initial artificial neural network is obtained, an ANN algorithm is used to train the optimized initial artificial neural network. The ANN algorithm used to train the optimized initial artificial neural network may be any type of ANN algorithm, such as a back propagation-ANN (Back-Propagation-ANN, BP-ANN) or a generalized regression linear network (General Regression Neural Network, GRNN).

Based on an optimized initial weight and initial offset of each layer of neural elements in the optimized initial artificial neural network, the neural elements learn from each other. Finally, the trained artificial neural network is obtained. Therefore, a training process of the artificial neural network is completed.

After the training process of the artificial neural network is completed, the trained artificial neural network may be used for positioning. When the trained artificial neural network is obtained, a mapping function from fingerprint information to geographical location information of a location point is obtained. When a device in a network needs to be positioned, first, fingerprint information of a to-be-positioned point at which the device is positioned is obtained. The fingerprint information herein needs to be a same measurement quantity as the fingerprint information obtained in the training phase in step S201. When the fingerprint information of the to-be-positioned point at which the device is positioned is obtained, the fingerprint information is used as an input layer neural element of the trained artificial neural network. An input layer neural element processed by the trained artificial neural network is geographical location information of the to-be-positioned point at which the device is positioned. Therefore, positioning processing on the to-be-positioned point is completed.

According to the method for improving positioning performance of an artificial neural network provided in this embodiment, when an artificial neural network is applied to wireless positioning, after a random initial weight and offset are used to establish an initial artificial neural network, a PSO algorithm is used to optimize an initial weight and an initial offset at each layer of the initial artificial neural network, so as to obtain an optimized initial artificial neural network. The optimized artificial neural network is trained to obtain a trained artificial neural network. An initial weight and an initial offset of a global best can be obtained by using the PSO algorithm to optimize the initial weight and the initial offset. Therefore, the artificial neural network generated by using a positioning method provided in this embodiment has relatively high positioning performance.

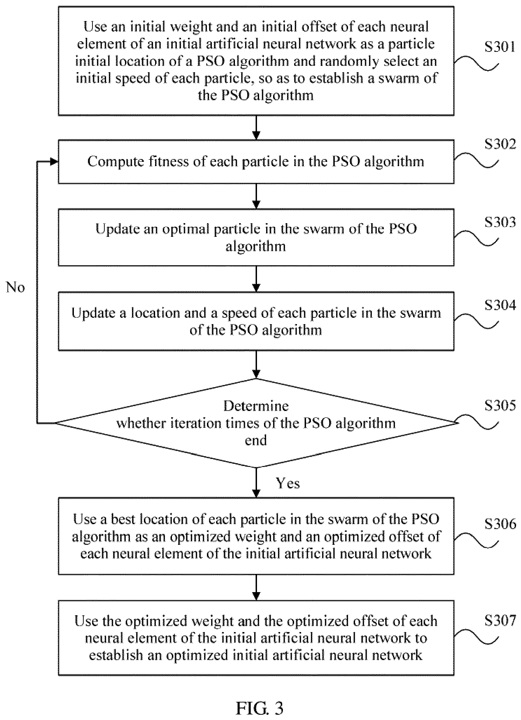

FIG. 3 is a flowchart of Embodiment 2 of a method for improving positioning performance of an artificial neural network according to an embodiment of the present invention. Specifically, this embodiment is a specific execution process of step S203 in the embodiment shown in FIG. 2. As shown in FIG. 3, the method of this embodiment includes the following steps.

Step S301: Use an initial weight and an initial offset of each neural element of an initial artificial neural network as a particle initial location of a PSO algorithm and randomly select an initial speed of each particle, so as to establish a swarm of the PSO algorithm.

First, the initial weight and the initial offset of each neural element of the initial artificial neural network are used as an initial location of each particle in the PSO algorithm. The initial speed of each particle is randomly selected to complete establishment of the swarm of the PSO algorithm.

Specifically, in the method of this embodiment, the PSO algorithm ends when iteration times end, that is, the iteration times reach preset iteration times. In each iteration process, steps S302-S305 may be successively and cyclically performed.

Step S302: Compute fitness of each particle in the PSO algorithm.

Step S303: Update an optimal particle in the swarm of the PSO algorithm.

Specifically, after fitness of each particle in the swarm of the PSO algorithm is obtained, a location corresponding to each particle needs to be substituted into the initial artificial neural network, and is used as a weight and an offset of each neural element in the initial artificial neural network. Then, fingerprint information of each test point is input into the initial artificial neural network, so as to compute an error between output of the initial artificial neural network and geographical location information of each test point. The foregoing minimum-error weight and offset are used as the optimal particle in the PSO algorithm. After the optimal particle in the PSO algorithm is obtained, a best location (gbest) in the swarm of the PSO algorithm is updated.

Step S304: Update a location and a speed of each particle in the swarm of the PSO algorithm.

Specifically, after the best location in the swarm of the PSO algorithm is updated, other particles all move towards the optimal particle at a specific speed, so as to obtain a newest location of each particle. Then, a speed of each particle further needs to be updated to obtain a new swarm of the PSO algorithm.

Step S305: Determine whether iteration times of the PSO algorithm end.

Specifically, when the iteration times of the PSO algorithm do not end, step S302 is performed again. Otherwise, step S306 is performed.

Step S306: Use a best location of each particle in the swarm of the PSO algorithm as an optimized weight and an optimized offset of each neural element of the initial artificial neural network.

Specifically, when the iteration times of the PSO algorithm end, the best location (pbest) of each particle in the PSO algorithm is used as the optimized weight and the optimized offset of each neural element of the initial artificial neural network corresponding to the particle.

Step S307: Use the optimized weight and the optimized offset of each neural element of the initial artificial neural network to establish an optimized initial artificial neural network.

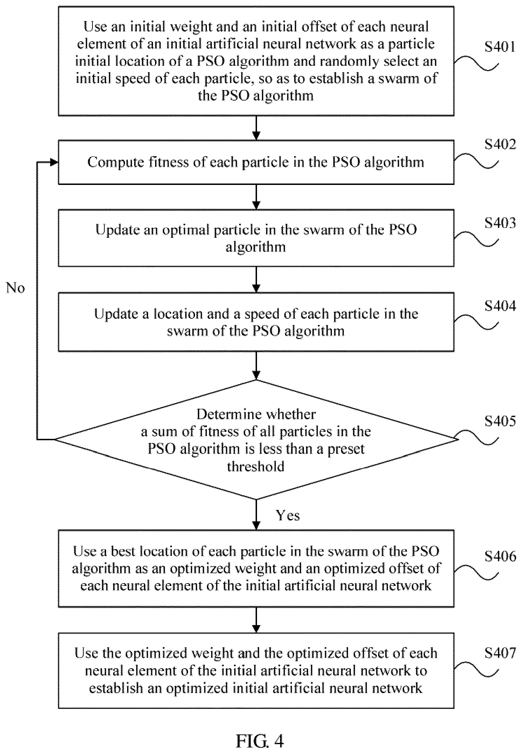

FIG. 4 is a flowchart of Embodiment 3 of a method for improving positioning performance of an artificial neural network according to an embodiment of the present invention. Specifically, this embodiment is another specific execution process of step S203 in the embodiment shown in FIG. 2. As shown in FIG. 4, the method of this embodiment includes the following steps.

Step S401: Use an initial weight and an initial offset of each neural element of an initial artificial neural network as a particle initial location of a PSO algorithm and randomly select an initial speed of each particle, so as to establish a swarm of the PSO algorithm.

First, the initial weight and the initial offset of each neural element of the initial artificial neural network are used as an initial location of each particle in the PSO algorithm. The initial speed of each particle is randomly selected to complete establishment of the swarm of the PSO algorithm.

Specifically, in the method of this embodiment, the PSO algorithm ends when a sum of fitness of all particles is less than a preset threshold. In each iteration process, steps S402-S405 may be successively and cyclically performed.

Step S402: Compute fitness of each particle in the PSO algorithm.

Step S403: Update an optimal particle in the swarm of the PSO algorithm.

Specifically, after fitness of each particle in the swarm of the PSO algorithm is obtained, a location corresponding to each particle needs to be substituted into the initial artificial neural network, and is used as a weight and an offset of each neural element in the initial artificial neural network. Then, fingerprint information of each test point is input into the initial artificial neural network, so as to compute an error between output of the initial artificial neural network and geographical location information of each test point. The foregoing minimum-error weight and offset are used as the optimal particle in the PSO algorithm. After the optimal particle in the PSO algorithm is obtained, a best location (gbest) in the swarm of the PSO algorithm is updated.

Step S404: Update a location and a speed of each particle in the swarm of the PSO algorithm.

Specifically, after the best location in the swarm of the PSO algorithm is updated, other particles all move towards the optimal particle at a specific speed, so as to obtain a newest location of each particle. Then, a speed of each particle further needs to be updated to obtain a new swarm of the PSO algorithm.

Step S405: Determine whether a sum of fitness of all particles in the PSO algorithm is less than a preset threshold.

Specifically, the fitness of each particle in the PSO algorithm represents an error between an actual location of the particle and a best location, and smaller fitness indicates a smaller error. Therefore, when the fitness of each particle in the PSO algorithm is extremely small, each particle is relatively close to the best location. When the sum of the fitness of all the particles in the PSO algorithm is less than the preset threshold, there is a relatively short average distance between particles optimized by using the PSO algorithm and the best location. In this way, better optimized weight and optimized offset of each neural element exist in the initial artificial neural network that is generated by using each optimized particle. Therefore, when each iteration of the PSO algorithm ends, the sum of the fitness of all the particles is computed. If the sum of the fitness of all the particles in the PSO algorithm is not less than the preset threshold, step S402 is performed again. Otherwise, step S406 is performed. The preset threshold may be preset in a system according to experience. A smaller preset threshold indicates a better optimization result of the PSO algorithm, but requires a longer optimization time.

Step S406: Use a best location of each particle in the swarm of the PSO algorithm as an optimized weight and an optimized offset of each neural element of the initial artificial neural network.

Specifically, when the sum of the fitness of all the particles in the PSO algorithm is less than the preset threshold, the best location (pbest) of each particle in the PSO algorithm is used as the optimized weight and the optimized offset of each neural element of the initial artificial neural network that are corresponding to the particle.

Step S407: Use the optimized weight and the optimized offset of each neural element of the initial artificial neural network to establish an optimized initial artificial neural network.

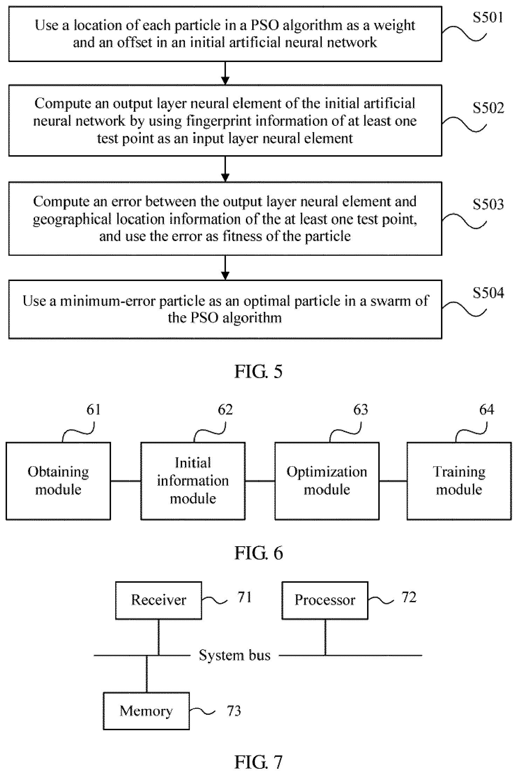

FIG. 5 is a flowchart of Embodiment 4 of a method for improving positioning performance of an artificial neural network according to an embodiment of the present invention. Specifically, this embodiment is a specific execution process of step S302 and step S303 in the embodiment shown in FIG. 3 (or step S402 and step S403 in the embodiment shown in FIG. 4). As shown in FIG. 5, the method of this embodiment includes:

Step S501: Use a location of each particle in a PSO algorithm as a weight and an offset in an initial artificial neural network.

Step S502: Compute an output layer neural element of the initial artificial neural network by using fingerprint information of at least one test point as an input layer neural element.

Step S503: Compute an error between the output layer neural element and geographical location information of the at least one test point, and use the error as fitness of a particle.

Step S504: Use a minimum-error particle as an optimal particle in a swarm of the PSO algorithm.

Specifically, this embodiment is a specific method for computing fitness of each particle in the PSO algorithm and selecting the optimal particle in the PSO algorithm. That is, fingerprint information and geographical location information of a test point are used as an optimization target of the PSO algorithm, and the PSO algorithm is used to perform optimization processing on the particle.

FIG. 6 is a schematic structural diagram of Embodiment 1 of an apparatus for improving positioning performance of an artificial neural network according to an embodiment of the present invention. As shown in FIG. 6, the method of this embodiment includes:
an obtaining module 61, configured to obtain geographical location information and fingerprint information of at least one test point;
an initial information module 62, configured to randomly select an initial weight and an initial offset of each neural element at an input layer, an output layer, or a hidden layer by using the fingerprint information of the at least one test point as an input layer neural element and using the geographical location information of the at least one test point as an output layer neural element, so as to establish an initial ANN;
an optimization module 63, configured to optimize the initial weight and the initial offset of each neural element of the initial ANN by using a PSO algorithm, to obtain an optimized initial ANN; and
a training module 64, configured to train the optimized initial ANN to obtain a trained ANN.

The positioning apparatus provided in this embodiment is configured to perform the technical solution in the method embodiment shown in FIG. 2, and an implementation principle and a technical effect of the apparatus are similar to those of the method. Details are not described herein.

Further, in the embodiment shown in FIG. 6, the optimization module 63 is specifically configured to: use the initial weight and the initial offset of each neural element of the initial ANN as a particle initial location of the PSO algorithm and randomly select an initial speed of each particle, so as to establish a swarm of the PSO algorithm; in each iteration of an iteration process of the PSO algorithm, sequentially compute fitness of each particle in the PSO algorithm, update an optimal particle in the swarm of the PSO algorithm, and update a location and a speed of each particle in the swarm of the PSO algorithm, until iteration times of the PSO algorithm end; use a best location of each particle in the swarm of the PSO algorithm as an optimized weight and an optimized offset of each neural element of the initial ANN; and use the optimized weight and the optimized offset of each neural element of the initial ANN to establish the optimized initial ANN.

Further, in the embodiment shown in FIG. 6, the optimization module 63 is specifically configured to: use the initial weight and the initial offset of each neural element of the initial ANN as a particle initial location of the PSO algorithm and randomly select an initial speed of each particle, so as to establish a swarm of the PSO algorithm; in each iteration of an iteration process of the PSO algorithm, sequentially compute fitness of each particle in the PSO algorithm, update an optimal particle in the swarm of the PSO algorithm, and update a location and a speed of each particle in the swarm of the PSO algorithm, until a sum of fitness of all particles in the PSO algorithm is less than a preset threshold; use a best location of each particle in the swarm of the PSO algorithm as an optimized weight and an optimized offset of each neural element of the initial ANN; and use the optimized weight and the optimized offset of each neural element of the initial ANN to establish the optimized initial ANN.

Further, in the embodiment shown in FIG. 6, the optimization module 63 is specifically configured to: use each particle in the PSO algorithm as a weight and an offset in the initial ANN; compute an output layer neural element of the initial ANN by using the fingerprint information of the at least one test point as an input layer neural element; compute an error between the output layer neural element and the geographical location information of the at least one test point, and use the error as fitness of the particle; and use a minimum-error particle as the optimal particle in the swarm of the PSO algorithm.

Further, in the embodiment shown in FIG. 6, the artificial neural network is a BP-ANN or a GRNN.

Further, in the embodiment shown in FIG. 6, the fingerprint information is an RSSI.

The positioning apparatus provided in this embodiment of the present invention may be disposed in a base station of a wireless network, or may be an additional network device independent of a base station.

FIG. 7 is a schematic structural diagram of Embodiment 2 of an apparatus for improving positioning performance of an artificial neural network according to an embodiment of the present invention. As shown in FIG. 7, a positioning apparatus of this embodiment includes: a receiver 71 and a processor 72. Optionally, the positioning apparatus may further include a memory 73. The receiver 71, the processor 72, and the memory 73 may be connected by using a system bus or in another manner, and that they are connected by using a system bus is used as an example in FIG. 7. The system bus may be an Industrial Standard Architecture (Industrial Standard Architecture, ISA) bus, a Peripheral Component Interconnect (Peripheral Component Interconnect, PCI) bus, an Extended Industrial Standard Architecture (Extended Industrial Standard Architecture, EISA) bus, or the like. The system bus may be classified into an address bus, a data bus, a control bus, and the like. For ease of representation, only one line is used in FIG. 7 for representation, but it does not mean that there is only one bus or one type of bus.

The receiver 71 is configured to obtain geographical location information and fingerprint information of at least one test point.

The processor 72 is configured to randomly select an initial weight and an initial offset of each neural element at an input layer, an output layer, or a hidden layer by using the fingerprint information of the at least one test point as an input layer neural element and using the geographical location information of the at least one test point as an output layer neural element, so as to establish an initial ANN; optimize the initial weight and the initial offset of each neural element of the initial ANN by using a PSO algorithm, to obtain an optimized initial ANN; and train the optimized initial ANN to obtain a trained ANN.

The memory 73 is configured to store data received by the receiver 71 and provide the data for the processor 72 for processing.

The positioning apparatus provided in this embodiment of the present invention may be disposed in a base station of a wireless network, or may be an additional network device independent of a base station.

In an implementation of the embodiment shown in FIG. 7, the processor 72 is specifically configured to: use the initial weight and the initial offset of each neural element of the initial ANN as a particle initial location of the PSO algorithm and randomly select an initial speed of each particle, so as to establish a swarm of the PSO algorithm; in each iteration of an iteration process of the PSO algorithm, sequentially compute fitness of each particle in the PSO algorithm, update an optimal particle in the swarm of the PSO algorithm, and update a location and a speed of each particle in the swarm of the PSO algorithm, until iteration times of the PSO algorithm end; use a best location of each particle in the swarm of the PSO algorithm as an optimized weight and an optimized offset of each neural element of the initial ANN; and use the optimized weight and the optimized offset of each neural element of the initial ANN to establish the optimized initial ANN.

In an implementation of the embodiment shown in FIG. 7, the processor 72 is specifically configured to: use the initial weight and the initial offset of each neural element of the initial ANN as a particle initial location of the PSO algorithm and randomly select an initial speed of each particle, so as to establish a swarm of the PSO algorithm; in each iteration of an iteration process of the PSO algorithm, sequentially compute fitness of each particle in the PSO algorithm, update an optimal particle in the swarm of the PSO algorithm, and update a location and a speed of each particle in the swarm of the PSO algorithm, until a sum of fitness of all particles in the PSO algorithm is less than a preset threshold; use a best location of each particle in the swarm of the PSO algorithm as an optimized weight and an optimized offset of each neural element of the initial ANN; and use the optimized weight and the optimized offset of each neural element of the initial ANN to establish the optimized initial ANN.

In an implementation of the embodiment shown in FIG. 7, the processor 72 is specifically configured to: use the location of each particle in the PSO algorithm as a weight and an offset in the initial ANN; compute an output layer neural element of the initial ANN by using the fingerprint information of the at least one test point as an input layer neural element; compute an error between the output layer neural element and the geographical location information of the at least one test point, and use the error as fitness of the particle; and use a minimum-error particle as the optimal particle in the swarm of the PSO algorithm.

In an implementation of the embodiment shown in FIG. 7, the ANN is a back propagation-ANN or a generalized regression linear network.

In an implementation of the embodiment shown in FIG. 7, the fingerprint information is an RSSI.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof. Therefore, the protection scope of the present invention shall be subject to the protection scope of the claims.

## Claims

1. A method for improving positioning performance of an artificial neural network, comprising:
obtaining geographical location information and fingerprint information of at least one test point;
randomly selecting an initial weight and an initial offset of each neural element at an input layer, an output layer, or a hidden layer by using the fingerprint information of the at least one test point as an input layer neural element and by using the geographical location information of the at least one test point as an output layer neural element, so as to establish an initial artificial neural network ANN;
optimizing the initial weight and the initial offset of each neural element of the initial ANN by using a particle swarm optimization PSO algorithm, to obtain an optimized initial ANN; and
training the optimized initial ANN to obtain a trained ANN.

2. The method according to claim 1, wherein the optimizing the initial weight and the initial offset of each neural element of the initial ANN by using a PSO algorithm, to obtain an optimized initial ANN comprises:
using the initial weight and the initial offset of each neural element of the initial ANN as a particle initial location of the PSO algorithm and randomly selecting an initial speed of each particle, so as to establish a swarm of the PSO algorithm;
in each iteration of an iteration process of the PSO algorithm, sequentially computing fitness of each particle in the PSO algorithm, updating an optimal particle in the swarm of the PSO algorithm, and updating a location and a speed of each particle in the swarm of the PSO algorithm, until iteration times of the PSO algorithm end;
using a best location of each particle in the swarm of the PSO algorithm as an optimized weight and an optimized offset of each neural element of the initial ANN; and
using the optimized weight and the optimized offset of each neural element of the initial ANN to establish the optimized initial ANN.

3. The method according to claim 1, wherein the optimizing the initial weight and the initial offset of each neural element of the initial ANN by using a PSO algorithm, to obtain an optimized initial ANN comprises:
using the initial weight and the initial offset of each neural element of the initial ANN as a particle initial location of the PSO algorithm and randomly selecting an initial speed of each particle, so as to establish a swarm of the PSO algorithm;
in each iteration of an iteration process of the PSO algorithm, sequentially computing fitness of each particle in the PSO algorithm, updating an optimal particle in the swarm of the PSO algorithm, and updating a location and a speed of each particle in the swarm of the PSO algorithm, until a sum of fitness of all particles in the PSO algorithm is less than a preset threshold;
using a best location of each particle in the swarm of the PSO algorithm as an optimized weight and an optimized offset of each neural element of the initial ANN; and
using the optimized weight and the optimized offset of each neural element of the initial ANN to establish the optimized initial ANN.

4. The method according to claim 2 or 3, wherein the computing fitness of each particle in the PSO algorithm comprises:
using the location of each particle in the PSO algorithm as a weight and an offset in the initial ANN;
computing an output layer neural element of the initial ANN by using the fingerprint information of the at least one test point as an input layer neural element; and
computing an error between the output layer neural element and the geographical location information of the at least one test point, and using the error as the fitness of the particle; and
the updating an optimal particle in the swarm of the PSO algorithm comprises:
using a minimum-error particle as the optimal particle in the swarm of the PSO algorithm.

5. The method according to any one of claims 1 to 4, wherein the ANN is a back propagation-ANN or a generalized regression linear network.

6. The method according to any one of claims 1 to 5, wherein the fingerprint information is a received signal strength indicator RSSI.

7. An apparatus for improving positioning performance of an artificial neural network, comprising:
an obtaining module, configured to obtain geographical location information and fingerprint information of at least one test point;
an initial information module, configured to randomly select an initial weight and an initial offset of each neural element at an input layer, an output layer, or a hidden layer by using the fingerprint information of the at least one test point as an input layer neural element and using the geographical location information of the at least one test point as an output layer neural element, so as to establish an initial artificial neural network ANN;
an optimization module, configured to optimize the initial weight and the initial offset of each neural element of the initial ANN by using a particle swarm optimization PSO algorithm, to obtain an optimized initial ANN; and
a training module, configured to train the optimized initial ANN to obtain a trained ANN.

8. The apparatus for improving positioning performance of an artificial neural network according to claim 7, wherein the optimization module is specifically configured to: use the initial weight and the initial offset of each neural element of the initial ANN as a particle initial location of the PSO algorithm and randomly select an initial speed of each particle, so as to establish a swarm of the PSO algorithm; in each iteration of an iteration process of the PSO algorithm, sequentially compute fitness of each particle in the PSO algorithm, update an optimal particle in the swarm of the PSO algorithm, and update a location and a speed of each particle in the swarm of the PSO algorithm, until iteration times of the PSO algorithm end; use a best location of each particle in the swarm of the PSO algorithm as an optimized weight and an optimized offset of each neural element of the initial ANN; and use the optimized weight and the optimized offset of each neural element of the initial ANN to establish the optimized initial ANN.

9. The apparatus for improving positioning performance of an artificial neural network according to claim 7, wherein the optimization module is specifically configured to: use the initial weight and the initial offset of each neural element of the initial ANN as a particle initial location of the PSO algorithm and randomly select an initial speed of each particle, so as to establish a swarm of the PSO algorithm; in each iteration of an iteration process of the PSO algorithm, sequentially compute fitness of each particle in the PSO algorithm, update an optimal particle in the swarm of the PSO algorithm, and update a location and a speed of each particle in the swarm of the PSO algorithm, until a sum of fitness of all particles in the PSO algorithm is less than a preset threshold; use a best location of each particle in the swarm of the PSO algorithm as an optimized weight and an optimized offset of each neural element of the initial ANN; and use the optimized weight and the optimized offset of each neural element of the initial ANN to establish the optimized initial ANN.

10. The apparatus for improving positioning performance of an artificial neural network according to claim 8 or 9, wherein the optimization module is specifically configured to: use the location of each particle in the PSO algorithm as a weight and an offset in the initial ANN; compute an output layer neural element of the initial ANN by using the fingerprint information of the at least one test point as an input layer neural element; compute an error between the output layer neural element and the geographical location information of the at least one test point, and use the error as the fitness of the particle; and use a minimum-error particle as the optimal particle in the swarm of the PSO algorithm.

11. The apparatus for improving positioning performance of an artificial neural network according to any one of claims 7 to 10, wherein the ANN is a back propagation-ANN or a generalized regression linear network.

12. The apparatus for improving positioning performance of an artificial neural network according to any one of claims 7 to 11, wherein the fingerprint information is a received signal strength indicator RSSI.
